# FASCICULE DE BREVET EUROPEEN

(11) **EP 3 194 178 B1**
(45) Date de publication et mention de la délivrance du brevet: **27.02.2019**
(21) Numéro de dépôt: 15767121.5
(22) Date de dépôt: 14.09.2015
(51) Int. Cl.: B42D 25/351, B42D 25/355, B42D 25/346, B42D 25/373, B42D 25/369, B42D 25/36, B42D 25/378, C09D 11/50, B44F 1/10

(54) **ELEMENT DE SECURITE**
SICHERHEITSELEMENT
SECURITY ELEMENT

(30) Priorité: 17.09.2014 FR 1458762
(43) Date de publication de la demande: 26.07.2017
(73) Titulaire: Oberthur Fiduciaire SAS, 75008 Paris (FR)
(72) Inventeur: CAMUS, Michel, F-38140 Rives Sur Fure (FR); MACHIZAUD, Jacques, F-38500 Voiron (FR)
(74) Mandataire: Nony
(86) Numéro de dépôt international: PCT/EP2015/070947
(87) Numéro de publication internationale: WO 2016/041898

(56) Documents cités:
- WO-A1-03/061980
- US-A1- 2008 160 226

## Description

La présente invention concerne les documents sécurisés et les éléments de sécurité utilisés pour sécuriser les documents.

Des billets de banque et autres documents sécurisés, y compris chèques, mandats, cartes d'identité, cartes de crédit ou cartes de garantie, formés à partir de papiers intégrant des fils de sécurité, c'est-à-dire des bandes plus ou moins larges, ont été mis en circulation depuis un certain nombre d'années et sont maintenant largement utilisés dans de nombreux pays.

Les fils de sécurité sont dans ces documents dans certains cas exposés à la vue, en lumière réfléchie, dans des régions prédéfinies présentes sur au moins une face du papier, ces régions étant communément appelées « fenêtres ».

Les fils de sécurité rendent l'imitation des documents sécurisés plus difficile. Ils contribuent à l'authentification des documents, généralement en leur donnant une apparence différente en lumière transmise et en lumière réfléchie.

Des méthodes de fabrication d'un papier présentant un fil de sécurité incorporé en fenêtres sont connues des demandes EP 0059056, WO 93/08327 et WO 03/095188.

Par ailleurs, les fabricants de fils de sécurité cherchent à réaliser ceux-ci avec des sécurités de niveau 1 facilement identifiables par l'homme de la rue, tout en étant difficiles à reproduire par les faussaires.

Il est ainsi intéressant de réaliser les fils avec des zones dont la couleur change en fonction de l'angle d'observation, ce qui est impossible à reproduire par photocopie. Une façon d'y parvenir est d'utiliser des cristaux liquides cholestériques.

Par ailleurs, les fils de sécurité sont classiquement réalisés avec des zones produisant des motifs en lumière transmise, grâce à la présence d'une couche de métal pourvue d'évidements laissant passer la lumière lorsque le document est observé en transvision.

De nombreuses structures ont déjà été proposées qui proposent, sur un même fil de sécurité, la présence d'une couche de métal et de cristaux liquides.

GB 2 399 054A divulgue un fil de sécurité comportant des motifs formés par démétallisation d'une couche de métal. Le fil comporte également des éléments magnétiques. Ce document envisage la possibilité de munir le fil d'une couche de cristaux liquides et d'utiliser un fond sombre pour améliorer leur visibilité. Cette demande ne mentionne toutefois pas de structure particulière concernant la mise en oeuvre de ces cristaux liquides.

US 2011/0114733A1 divulgue un fil de sécurité destiné à être intégré en fenêtres, qui comporte un substrat, et d'un côté de celui-ci, une structure mince discontinue à trois couches, comportant une couche de métal, une couche d'espacement et une couche absorbante. La structure mince est recouverte par une couche de cristaux liquides. La structure mince apparaît, lorsqu'observée en réflexion, de couleur noire, et sa présence permet de faire ressortir la visibilité des cristaux liquides. La structure mince peut être recouverte par des éléments magnétiques également de couleur noire. Dans cette publication, le motif qui apparaît en lumière réfléchie du fait de l'accroissement de la visibilité des cristaux liquides en raison d'un fond sombre sous-jacent, est défini par le contraste entre la structure mince et les évidements formés dans celle-ci.

La publication WO 03/061980A1 divulgue un fil de sécurité comportant un support recouvert par une couche de métal, elle-même recouverte par une résine de couleur sombre, et par une couche de cristaux liquides, laquelle s'étend continûment. Cette dernière recouvre ainsi des régions métallisées et démétallisées de la couche de métal. La résine de couleur sombre peut être remplacée par endroits par une résine transparente. Les motifs qui apparaissent en lumière réfléchie du fait de l'accroissement de la visibilité des cristaux liquides en raison de la présence d'un fond sombre sous-jacent sont définis par le contraste qui existe entre la résine de couleur sombre et les zones démétallisées, ou le contraste qui existe entre les zones où la résine de couleur sombre est présente et celles où elle est remplacée par une résine transparente. Ces zones où la résine transparente est présente se superposent aux régions métallisées de la couche de métal.

La demande EP 2 028 017 A2 divulgue un fil de sécurité comportant des motifs formés par métallisation et démétallisation d'un substrat, la couche de métal se superposant avec une couche de cristaux liquides et une couche absorbante qui permet de former un fond de couleur sombre permettant d'accroitre la visibilité des interférences lumineuses provoquées par les cristaux liquides, notamment par absorption de la lumière transmise à travers la couche de cristaux liquides. En effet, seules les interférences en réflexion sont alors visibles et elles génèrent ainsi un effet visible de changement de couleur selon l'angle d'observation (« colorshift »). La couche de cristaux liquides n'est visible qu'à travers les évidements de la couche de métal, là où ces évidements se superposent avec la couche absorbante de couleur sombre. Le motif visible défini par les cristaux liquides correspond ainsi au motif défini par des évidements de la couche de métal.

Il est connu de réaliser des fils de sécurité par apposition d'une couche de cristaux liquides sur une face d'un support revêtu d'une couche d'encre noire déposée par impression. Une couche semi-réfléchissante d'aluminium, déposée sur la face du support opposée à celle portant la couche d'encre noire et les cristaux liquides, permet de masquer l'impression noire. Un tel fil n'offre pas entière satisfaction, car la couche de métal continue semi-réfléchissante empêche d'avoir des évidements transparents, et diminue la visibilité des motifs perçus en lumière transmise.

Il est également connu de déposer sur un support une couche d'aluminium présentant des motifs formés par métallisation et/ou démétallisation; la couche d'aluminium est oxydée en surface, pour être assombrie, puis elle est recouverte d'une couche de cristaux liquides. Un tel procédé est notamment décrit dans la demande WO 2013/050140 et nécessite l'utilisation d'équipements spécifiques et généralement coûteux.

Le document US 2008/160226 A1 décrit un élément de sécurité tel que revendiqué aux termes du préambule de la revendication 1.

L'invention vise à perfectionner encore les documents sécurisés et les éléments de sécurité utilisés pour ce faire, notamment les fils de sécurité, et elle y parvient grâce à un élément de sécurité pour document sécurisé, comportant :
- un support,
- une couche métallique portée par le support, définissant dans au moins une première zone un premier motif visible en lumière transmise, notamment un premier motif formé par une métallisation et/ou une démétallisation du support,
- une couche interférentielle non opaque, de préférence gonio chromatique, notamment une couche de cristaux liquides, portée par le support, présente au moins dans une deuxième zone distincte de la première,
- une couche auxiliaire absorbante, de préférence de couleur sombre, permettant de faire ressortir en lumière réfléchie au moins un deuxième motif avec la couche interférentielle non opaque en jouant sur le caractère absorbant du fond situé derrière la couche interférentielle non opaque, ce deuxième motif étant défini par un contraste entre l'association de la couche auxiliaire et de la couche interférentielle non opaque, et une zone métallisée de la couche de métal ou entre l'association de la couche auxiliaire et de la couche interférentielle non opaque, et son environnement au niveau d'une zone démétallisée de la couche de métal, la couche auxiliaire étant située essentiellement hors de la première zone.

De préférence, la couche interférentielle non opaque est une couche de cristaux liquides. En variante, c'est une couche de pigments interférentiels.

L'élément de sécurité selon l'invention permet de proposer une sécurité de niveau 1 facilement reconnaissable par l'homme de la rue tout en étant difficile à contrefaire.

La présence de la première zone permet d'obtenir l'effet classique dit de "CLEARTEXT" des fils de sécurité, à savoir l'observation d'un motif en lumière transmise du fait de la métallisation et/ou démétallisation du support; cet effet est clairement perceptible, car la couche de métal peut être opaque et les évidements peuvent ne pas être recouverts par une couche semi-transparente.

On entend par « métallisation et/ou démétallisation du support » tout procédé comprenant au moins une étape de métallisation ou démétallisation du support. Il s'agit en particulier d'un procédé de métallisation sélective ou d'un procédé de métallisation puis démétallisation sélective. De préférence, il s'agit d'un procédé de métallisation puis démétallisation sélective du support.

On entend par « métallisation sélective » ou « démétallisation sélective », respectivement une métallisation ou une démétallisation non totale, c'est-à-dire qui ne se fait pas sur toute la surface du support et permet ainsi de former au moins un motif.

Selon une variante, le premier motif est formé par impression d'une encre métallisée, notamment métallique.

Par "association de la couche auxiliaire et de la couche interférentielle non opaque, notamment la couche de cristaux liquides", on désigne le produit de la superposition de ces deux couches.

La couche interférentielle non opaque, notamment la couche de cristaux liquides de l'élément de sécurité selon l'invention, peut être présente dans la première zone. La couche interférentielle non opaque, notamment la couche de cristaux liquides, peut notamment recouvrir entièrement une face du support. Néanmoins, l'effet goniochromatique peut ne pas apparaître dans la première zone, du fait du caractère réfléchissant de la couche de métal. L'effet goniochromatique peut n'apparaître que dans la deuxième zone, du fait du caractère absorbant de la couche auxiliaire.

Par « absorbant » il faut comprendre absorbant tout où partie du spectre visible par l'oeil (380 à 800 nm).

La réflectance de la couche absorbante, mesurée selon la norme ISO 15368 « Optique et instruments d'optique - Méthode de mesurage de la réflectance des surfaces planes et de la transmittance des éléments à plans parallèles » est de préférence inférieure ou égale à 10%, et plus préférentiellement inférieure ou égale à 5%.

La couche absorbante est de préférence de couleur sombre, et plus préférentiellement noire.

La couche auxiliaire de l'élément de sécurité selon l'invention peut être déposée sous forme d'un aplat s'étendant dans toute la deuxième zone. Dans ce cas, la couche de métal peut former le motif. En variante, la couche auxiliaire peut être déposée avec des ajours, dans la deuxième zone. Dans ce cas, la couche auxiliaire peut former le motif.

Le deuxième motif peut définir une image tramée. Par "image tramée", il faut comprendre toute image formée de pixels sous forme de points ou lignes, dont la taille et/ou la répartition permet de reproduire différents niveaux de gris à une distance suffisante d'observation. En particulier, le deuxième motif peut définir une image 3D grâce à un effet d'ombrage, comme divulgué par exemple dans la publication EP 1 674 286 A1.

La couche auxiliaire est de préférence formée d'un revêtement opaque.

La couche auxiliaire peut être de couleur noire, comme indiqué ci-dessus.

La couche auxiliaire peut être formée par un dépôt d'encre.

La couche auxiliaire peut présenter des propriétés magnétiques, et en particulier être détectable à l'aide d'une loupe magnétique par exemple. On peut réaliser la couche auxiliaire avec une encre magnétique. La couche auxiliaire peut également présenter des propriétés de conduction électrique. On obtient ainsi une sécurité de niveau 3, nécessitant, pour être vérifiée, un appareil de détection des propriétés magnétiques et/ou électriques de l'élément de sécurité.

La couche métallisée peut être ajourée dans la deuxième zone. Elle peut former un unique ajour, dont le contour peut être polygonal, circulaire ou elliptique, ou présenter une forme plus complexe. En présence d'un unique ajour, ce dernier peut définir un cadre au sein duquel apparaît le motif défini par la couche auxiliaire. Il est alors avantageux que la couche auxiliaire, au sein de l'ajour, reste espacée d'une distance non nulle du bord de l'ajour, de façon à donner l'impression d'encadrement du motif et ainsi le faire ressortir.

La couche métallisée peut définir dans la deuxième zone un motif en lumière transmise, notamment grâce à la présence de plusieurs ajours répartis comme les zones claires de l'image à restituer.

La couche auxiliaire peut s'étendre sur un côté du support opposé à celui portant la couche métallisée.

Le premier motif défini dans la première zone et le deuxième motif formé dans la deuxième zone peuvent être liés géométriquement ou concerner un même sujet, par exemple objet ou être vivant, notamment être identiques, ce qui peut faciliter leur comparaison. Par exemple, ils représentent un même symbole ou image mais de taille différente, ou encore l'un en positif et l'autre en négatif.

La couche interférentielle non opaque peut être sous forme d'un aplat dans la deuxième zone ou sous forme d'image ajourée, notamment tramée, dans la deuxième zone. Le dépôt de cette couche peut s'effectuer de façon repérée par rapport à la couche auxiliaire et/ou la couche de métal ; par exemple, des régions pleines de la couche interférentielle non opaque se superposent exactement avec des régions pleines de la couche auxiliaire ou avec des ajours de la couche de métal.

### Couche interférentielle non opaque, notamment cristaux liquides

Par "couche interférentielle", il faut comprendre une couche produisant un changement de couleur et/ou de saturation de la couleur par basculement, c'est-à-dire par changement de l'angle d'observation et/ou d'incidence de la lumière.

La couche interférentielle non opaque est de préférence constituée par une couche de cristaux liquides, lesquels génèrent leur couleur par un phénomène d'interférence du fait de leur structure moléculaire intrinsèque, notamment hélicoïdale, et de l'orientation de ces molécules formant un réseau sur le support.

La couche interférentielle non opaque peut être ajourée ou non.

Par "cristaux liquides", il faut comprendre des cristaux liquides de préférence cholestériques. Des exemples de cristaux liquides pouvant convenir sont divulgués dans les demandes EP 0 982 054 et EP 1 295 929.

On peut aussi utiliser en remplacement des cristaux liquides des pigments interférentiels, notamment décrits dans les brevets et demandes de brevets US 6,686,042, EP 227 423 et US 2013-0189454 A1.

Il peut s'agir aussi de pigments métalliques interférentiels opaques mais utilisés dans une proportion telle que la concentration des pigments au sein de la couche rend celle-ci non opaque.

Ces pigments métalliques peuvent comporter un coeur métallique (métal sous forme non oxydée).

Ces pigments peuvent présenter des propriétés goniochromatiques, ayant par exemple une structure Cr/SiO₂/Si/Al/Si/SiO₂/Cr ou Cr/SiO₂/Al/SiO₂/Cr.

### Support

Par "support", on désigne tout substrat convenant à l'incorporation au sein ou en surface d'un document à sécuriser, notamment un document comprenant un ou plusieurs jets de papier.

De préférence, le support est réalisé dans une matière thermoplastique, étant par exemple découpé dans un film de PET, également appelé polyester. Le support peut être sous forme de bobine avant son incorporation dans le document.

L'épaisseur du support est par exemple choisie dans la plage 2 µm à 60 µm.

De préférence, le support est transparent, et de préférence encore, incolore.

L'élément de sécurité peut former au sein du document un fil de sécurité, auquel cas le support est en bande. En variante, l'élément de sécurité est sous forme de patch ou de foil, auquel cas le support peut se présenter ou non en bande.

L'élément de sécurité peut être disposé uniquement à la surface du substrat du document, ou être recouvert par endroits par le substrat du document.

### Couche métallique

Par "couche métallique", on désigne une couche d'un ou plusieurs métaux, utilisés seuls ou sous forme d'alliages. Le métal est par exemple choisi parmi les métaux rencontrés habituellement dans les fils de sécurité, à savoir Al, Cr, Ni, Ag, Au, Cu, Sn, entre autres.

De préférence, l'épaisseur de métal est suffisante pour conférer de l'opacité à la couche, et notamment une densité optique D supérieure ou égale à 0,8 de préférence supérieur à 1,6, avec D = - log T, T étant le facteur de transmittance mesuré selon la norme ISO 15368.

Lorsque l'élément forme un fil de sécurité, sa largeur va par exemple de 0,5 à 15 mm, mieux de 3 à 8 mm.

En variante, l'épaisseur de métal est suffisamment faible pour que la couche soit semi-transparente, avec une densité optique par exemple inférieure ou égale à 0,8.

Le métal peut être directement au contact du support ou en variante recouvrir au moins une couche intermédiaire en contact avec le support, par exemple une couche utilisée pour permettre une métallisation et/ou démétallisation du support.

### Motifs

Par "premier motif' ou "deuxième motif', on désigne tout motif reconnaissable à l'oeil nu notamment, tel que par exemple un ou plusieurs caractères alphanumériques, ou l'image d'un sujet tel que personnage, animal, objet, paysage ou monument, apparaissant de préférence en 3D grâce à un effet d'ombrage obtenu par exemple grâce à une reproduction en demi-ton.

Le motif peut être formé avec une pluralité d'ajours, de même taille ou de taille variable.

Le premier ou le deuxième motif peut se retrouver ailleurs sur le document sécurisé, par exemple sous forme d'un filigrane ou d'une impression.

### Zones de l'élément

Par "deuxième zone distincte de la première", il faut comprendre que lorsque l'élément est observé en vue de face, les deux zones sont disjointes. De préférence, les premier et deuxième motifs sont éloignés d'une distance comprise entre 1 et 10 mm.

Chaque zone occupe sur l'élément de sécurité une surface comprise de préférence entre 5 et 100 mm².

L'élément de sécurité peut comporter plusieurs premières zones qui se succèdent le long de l'élément, à intervalles réguliers, par exemple compris entre 2 et 20 mm. Il peut en être de même des deuxièmes zones, qui peuvent se succéder avec le même intervalle le long de l'élément de sécurité.

Par "couche auxiliaire située essentiellement hors de la première zone", il faut comprendre que la couche de couleur sombre ne se superpose pas à la première zone ou se superpose à celle-ci si peu qu'elle n'occupe pas majoritairement l'étendue de la première zone. De préférence, la couche absorbante est disjointe de la première zone lorsque l'élément de sécurité est observé de face.

La couche absorbante peut recouvrir ainsi moins de 10% de l'étendue de la première zone.

### Couche auxiliaire

Par "couche absorbante", il faut comprendre que l'absorption de cette couche est suffisamment forte pour permettre de faire ressortir les interférences lumineuses, dues en particulier à la structure et à l'orientation des cristaux liquides ou autres constituants de la couche interférentielle non opaque, et permettre d'observer à l'oeil nu dans des conditions habituelles d'observation la couleur ou le changement de couleur dû à la couche interférentielle, notamment aux cristaux liquides, quand la direction d'observation change. La couche absorbante est de préférence de couleur sombre et cette couleur est de préférence le noir.

La couche absorbante peut ne présenter aucun ajour, se superposant sous forme d'aplat à un ajour défini par la couche de métal dans la première zone. De préférence, la couche absorbante ne contribue pas à la formation du premier motif.

### Autres aspects

L'invention a encore pour objet, selon d'autres de ses aspects, des éléments de sécurité ne présentant pas nécessairement la première zone telle que définie ci-dessus.

Ainsi, selon un premier de ces autres aspects, l'invention a pour objet un élément de sécurité pour document sécurisé, comportant:
- un support,
- une couche de métal recouvrant au moins partiellement le support sur une face, et définissant dans une zone un motif formé par métallisation et/ou démétallisation sélective,
- une couche interférentielle non opaque, notamment une couche de cristaux liquides, recouvrant au moins partiellement la couche de métal dans ladite zone,
- une couche auxiliaire absorbante, de préférence de couleur sombre, du côté de la face opposée du support, sous forme d'aplat, se superposant au moins partiellement à ladite zone, mieux recouvrant entièrement celle-ci.

Selon un autre aspect, l'invention a encore pour objet un élément de sécurité pour document sécurisé, comportant:
- un support,
- une couche de métal recouvrant au moins partiellement le support sur une face, et s'étendant de façon continue pour recouvrir entièrement au moins une zone du support,
- une couche auxiliaire absorbante, de préférence de couleur sombre, recouvrant la couche de métal dans ladite zone et définissant un motif dans cette zone, du côté de la même face du support que la couche de métal,
- une couche interférentielle non opaque, notamment de cristaux liquides recouvrant au moins partiellement la couche auxiliaire dans ladite zone.

Selon un autre aspect, l'invention a encore pour objet un élément de sécurité pour document sécurisé, comportant:
- un support,
- une couche de métal recouvrant le support sur une face, présentant dans une zone un ajour,
- une couche de cristaux liquides se superposant au moins partiellement à l'ajour du côté de ladite face,
- une couche auxiliaire absorbante, de préférence de couleur sombre, déposée du côté de l'autre face du support, se superposant au moins partiellement à l'ajour et aux cristaux liquides dans l'ajour, et définissant un motif.

L'invention selon cet aspect a pour avantage de permettre l'observation en lumière transmise du motif formé par la couche auxiliaire.

Selon un autre aspect, l'invention a encore pour objet un élément de sécurité pour document sécurisé, comportant:
- un support,
- une couche de métal recouvrant le support sur une face, présentant dans une zone un ajour,
- une couche auxiliaire absorbante, de préférence de couleur sombre, déposée au sein de l'ajour et définissant un motif,
- une couche interférentielle non opaque, de préférence une couche de cristaux liquides, recouvrant au moins partiellement la couche auxiliaire dans l'ajour.

L'invention selon cet aspect a pour avantage de permettre l'observation en lumière transmise du motif formé par la couche auxiliaire.

Toutes les caractéristiques pouvant s'appliquer au support, à la couche de métal, à la couche auxiliaire, à la couche interférentielle non opaque, notamment de cristaux liquides, et au motif, précédemment discutées en liaison avec le premier aspect de l'invention, peuvent s'appliquer également à ces quatre autres aspects de l'invention.

L'invention pourra être mieux comprise à la lecture de la description qui va suivre, d'exemples de mise en oeuvre non limitatifs de celle-ci, et à l'examen du dessin annexé, sur lequel :
- la figure 1 représente en vue de face un exemple de document sécurisé selon l'invention,
- la figure 2 représente en coupe longitudinale, partielle et schématique, un élément de sécurité selon l'invention,
- les figures 3 et 4 représentent deux exemples de motifs pouvant être observés sur l'élément de sécurité de la figure 2,
- les figures 5, 8 et 11 sont des vues analogues à la figure 2 de variantes de réalisation de l'élément de sécurité,
- les figures 6 et 7 représentent des exemples de motifs pouvant être observés sur l'élément de sécurité de la figure 5,
- les figures 9 et 10 représentent des exemples de motifs pouvant être observés sur l'élément de sécurité de la figure 8,
- les figures 12 et 13 représentent des exemples de motifs pouvant être observés sur l'élément de sécurité de la figure 11, et
- la figure 14 représente un détail d'une variante de réalisation de la figure 2,
- les figures 15 à 17 sont des vues analogues à la figure 2, de variantes de réalisation.

Sur les figures, les différents éléments constitutifs n'ont pas toujours été représentés en contact les uns avec les autres et avec un respect des proportions respectives réelles, dans un souci de clarté du dessin.

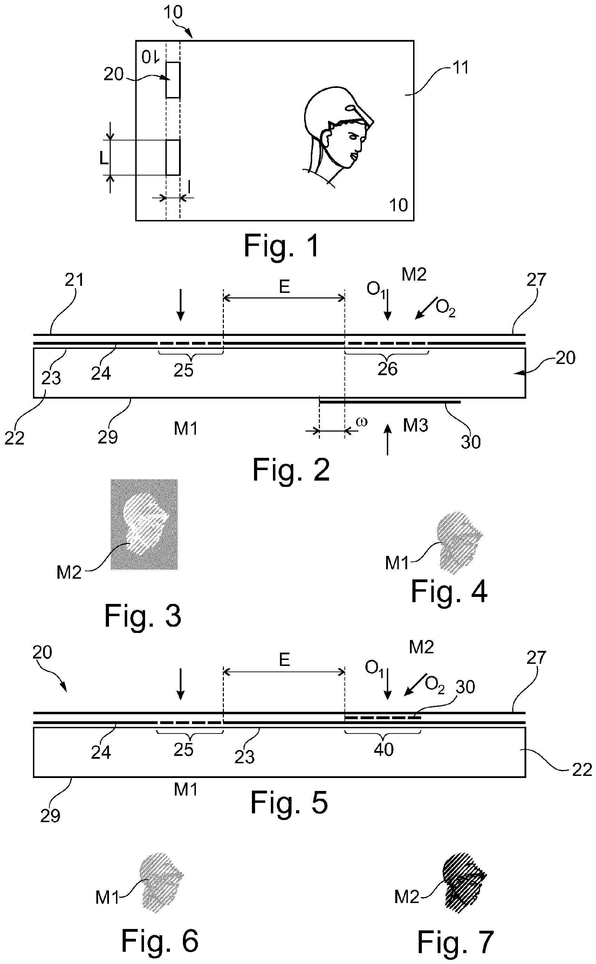

On a représenté à la figure 1 un document sécurisé 10 muni d'un élément de sécurité 20 selon l'invention.

Le document sécurisé 10 est par exemple un billet de banque et comporte un substrat fibreux 11, l'élément de sécurité 20 se présentant dans l'exemple considéré sous la forme d'un fil de sécurité s'étendant d'un bord à l'autre du substrat 11.

Le fil de sécurité 20 est dans l'exemple considéré introduit en fenêtres, ayant comme illustré sur la figure 2, une face supérieure 21 visible en lumière réfléchie.

La longueur L d'une fenêtre, mesurée parallèlement à l'axe longitudinal de l'élément 20, est de préférence supérieure ou égale à 5 mm, mieux à 10 mm.

La largeur *l* de l'élément 20 est par exemple comprise entre 4 et 8 mm.

L'élément de sécurité 20 comporte, comme on peut le voir à la figure 2, un substrat 22, de préférence réalisé dans une matière plastique transparente, par exemple du polyester.

La largeur du fil peut être comprise entre 0,5 et 15 mm, mieux entre 4 et 8 mm. L'épaisseur du film de support peut aller de 6 à 60 µm.

Ce substrat 22 est recouvert sur une face 23 par une couche de métal 24 qui est par exemple démétallisée dans une première zone 25 et dans une deuxième zone 26 distincte de la première, de façon à former dans chacune de ces zones un motif correspondant M1 ou M2. Un tel motif peut apparaître en positif ou en négatif en lumière transmise.

La couche de métal peut s'étendre jusqu'aux bords longitudinaux de l'élément 20 ou rester à une distance non nulle de ceux-ci.

La couche de métal 24 peut comporter plusieurs zones adjacentes lorsque l'élément 20 est observé de face et qui sont formées de métaux ayant des couleurs différentes.

La couche de métal 24 est recouverte par une couche de cristaux liquides 27, qui s'étend dans l'exemple illustré de façon continue sur toute la surface métallisée du substrat 22.

Le métal est par exemple de l'aluminium, du cuivre, du nickel, de l'or, et/ou de l'argent.

La couche de cristaux liquides peut avoir été déposée par enduction ou impression. Elle peut ou non s'étendre jusqu'aux bords longitudinaux de l'élément 20.

La couche 27 peut s'étendre de façon continue dans le sens longitudinal sur toue la longueur de l'élément ou sous forme de tronçons éloignés les uns des autres.

Le substrat 22 comporte, sur sa face verso 29 opposée à la face recto 23, un revêtement sombre 30 qui se superpose à la deuxième zone 26. Le revêtement 30 peut être plus long et plus large que le motif formé par démétallisation de la couche 24 dans la zone 26.

La couche de cristaux liquides 27 définit la face supérieure 21 de l'élément 20, visible au recto par exemple du document sécurisé 10. La couche de cristaux liquides 27 associée à la couche auxiliaire absorbante, de préférence de couleur sombre, présente des propriétés goniochromatiques et peut produire un effet de changement de couleur lorsque la direction d'observation de la face 21 change.

La démétallisation de la couche 24 dans la première zone 25 produit un motif visible en lumière transmise, tel que par exemple celui illustré à la figure 4, et qui correspond par exemple à la représentation 3D d'un personnage, avec des effets d'ombre. Dans l'exemple considéré, le revêtement 30 est par exemple un aplat d'une encre noire.

Le contour de la couche 30 peut avantageusement définir un motif, qui est visible côté verso du document sécurisé 10, en lumière réfléchie.

L'effet goniochromatique des cristaux liquides est observable lorsque ces cristaux liquides se superposent à un fond sombre. Ainsi, lorsque la couche de métal 24 forme le fond devant lequel les cristaux liquides sont observés, l'effet goniochromatique des cristaux liquides n'est pas révélé dans la première zone 25 lorsque l'élément de sécurité 20 est observé en réflexion du côté de la face 21.

Par contre, dans la deuxième zone 26, la couche de cristaux liquides 27 se superpose au revêtement sombre 30 dans les zones dépourvues de métal et l'effet goniochromatique des cristaux liquides peut être observé, c'est-à-dire que l'on peut percevoir un changement de couleur lorsque la direction d'observation passe de la direction O1 d'incidence normale à la direction O2 d'incidence oblique, à 45° par exemple, la couleur passant par exemple du vert en incidence normale au bleu en incidence oblique. On peut observer un motif M2 sur fond sombre, tel qu'illustré à la figure 3, les cristaux liquides n'étant pas révélés dans les parties de la zone 26 recouvertes de métal.

Les zones 25 et 26 peuvent être démétallisées de telle manière que les motifs observés dans ces zones correspondent par exemple au même personnage, objet ou scène, les motifs étant par exemple identiques ou liés autrement entre eux par un lien reconnaissable par l'observateur, véhiculant par exemple la même information. En particulier l'un des motifs est le négatif de l'autre motif.

La distance E, séparant la première zone 25 de la deuxième zone 26 le long de l'élément de sécurité 20, est par exemple comprise entre 5 et 10 mm.

Hors des zones 25 et 26, la couche de métal peut recouvrir continûment le support 22.

Le débordement w de la couche auxiliaire 30 par rapport à la deuxième zone 26, dans le sens longitudinal de l'élément, comme illustré sur la figure 2, peut être compris par exemple entre 0,5 et 2 mm.

En lumière transmise, on peut observer le premier motif M1. Par contre, la couche auxiliaire opaque 30 ne permet pas de voir le deuxième motif M2 en lumière transmise, du côté du verso du document 10.

En lumière réfléchie du côté du verso du document 10, la couche de revêtement 30 est visible et son contour peut former un troisième motif M3, qui présente ou non un lien reconnaissable avec les motifs M1 et M2. La forme du contour du troisième motif M3 peut se retrouver ailleurs sur le document 10.

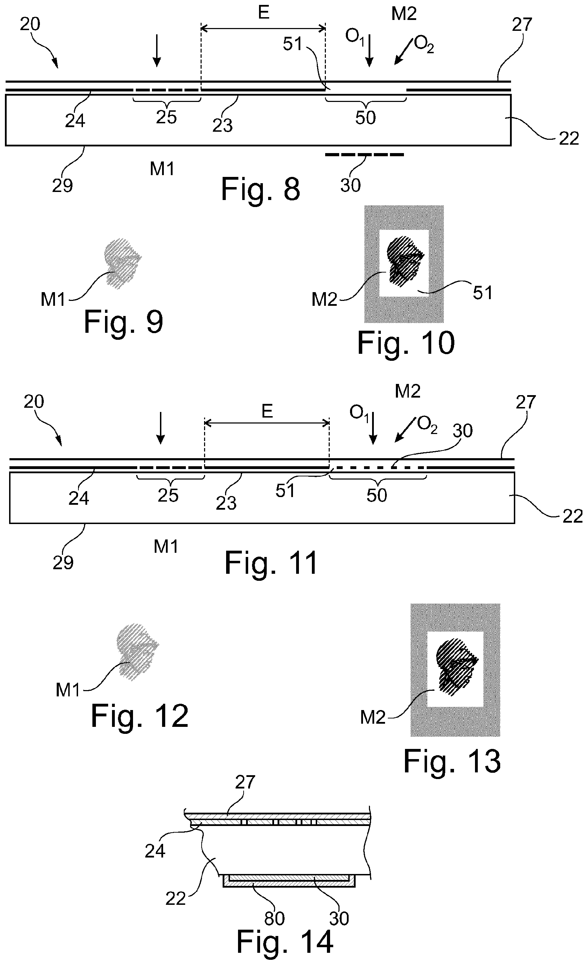

Le cas échéant, la couche de revêtement auxiliaire 30 est recouverte par une couche de masquage 80 qui réduit sa visibilité sur la face verso du document 10, comme illustré à la figure 14.

La couche de masquage 80 peut être continue ou non, étant par exemple tramée. Elle peut encore être semi-réfléchissante, étant par exemple métallique. Le caractère semi-transparent peut être dû à l'épaisseur de métal déposée ou au caractère discontinu, notamment tramé, de la couche de masquage.

La couche de masquage 80 peut encore être une couche pigmentaire, par exemple une encre déposée par impression.

La couche de masquage 80 est de préférence diffusante et à base de pigment(s) dispersé(s) dans un liant.

Lorsque l'on recherche un effet diffusant, la couche de masquage 80 peut comporter un mélange d'au moins deux charges, notamment nanométriques, d'indices de réfraction différents.

Sans être liée par une théorie, la Demanderesse estime que le mélange desdites au moins deux charges nanométriques d'indices de réfraction différents permet d'amplifier le phénomène de diffusion car la charge nanométrique d'indice de réfraction moindre réfracte peu la lumière incidente qui parcourt alors un chemin optique plus grand et pénètre davantage au sein de la couche, tandis que la charge nanométrique d'indice de réfraction plus élevé augmente le nombre de diffusions au sein de la couche. On obtient ainsi une pénétration importante et une diffusion importante de la lumière au sein de la couche, permettant ainsi à la couche de masquer la structure sous-jacente en réflexion sans que la couche ne soit opaque, ce qui nuirait à la visibilité de l'élément de sécurité en lumière transmise.

La couche de masquage 80 peut se présenter sous forme d'une couche de masquage unique, comportant ledit mélange précité d'au moins deux charges nanométriques.

De préférence encore, l'une au moins des charges nanométriques comporte de la silice (dioxyde de silicium) colloïdale, notamment pyrogénée, mieux est constituée de silice colloïdale pyrogénée. Une charge nanométrique comportant de la silice est avantageuse car elle présente l'avantage de ne pas absorber le rayonnement UV utile à la luminescence, ce qui permet de réaliser l'élément de sécurité avec une ou plusieurs couches luminescentes, notamment fluorescentes sous UV.

L'une des charges nanométriques du mélange, et de préférence la silice colloïdale, peut être présente en une quantité massique comprise entre 20 et 80 %, mieux entre 30 et 70 %, encore mieux entre 40 et 60 % par rapport à la masse de la couche de masquage 80.

La silice colloïdale a de préférence une dimension D50 comprise entre 30 et 1000 nm, mieux entre 30 et 500 nm, encore mieux entre 50 et 300 nm.

L'élément de sécurité peut comporter comme charge nanométrique du dioxyde de titane dans la couche de masquage 80. De préférence, la quantité de dioxyde de titane est suffisamment faible pour ne pas absorber outre mesure le rayonnement UV et permettre l'utilisation au sein de l'élément de sécurité d'au moins un composé luminescent, notamment fluorescent sous UV (365 nm), par exemple appliqué par impression sur la couche de masquage 80 ou mélangé à la couche 80 ou à un vernis ou à un adhésif de l'élément de sécurité.

Le dioxyde de titane est de préférence de nature anatase, car il a alors l'avantage de présenter une plus faible absorption des UV par rapport au dioxyde de titane de nature rutile. Le dioxyde de titane anatase est notamment au moins partiellement transparent aux UV, et en particulier transparent sur au moins une plage de longueurs d'ondes du domaine des UV.

L'autre des charges nanométriques du mélange, et de préférence le dioxyde de titane, peut être présent en une quantité massique comprise entre 1 et 40 %, mieux entre 2 et 30 %, encore mieux entre 3 et 15 % par rapport à la masse de la couche de masquage 80.

Le dioxyde de titane a de préférence une dimension D50 comprise entre 30 et 1000 nm, mieux entre 30 et 500 nm, encore mieux entre 50 et 300 nm.

Selon une variante préférée, lesdites au moins deux charges nanométriques sont respectivement de la silice colloïdale, de préférence pyrogénée, et du dioxyde de titane, de préférence anatase.

Selon cette variante, la silice colloïdale induit une diffusion de la lumière plus importante dans les longueurs d'onde courtes (bleu) et l'on obtient donc une couleur à dominante rouge-orangée en transmission (donc en réflexion spéculaire si les particules sont placées sur une couche au moins partiellement réfléchissante). Le dioxyde de titane permet de modifier le trajet de la lumière en augmentant la diffusion au sein de la couche de masquage 80, ce qui apporte une plus grande opacité et réduit ainsi l'aspect réfléchissant rouge-orangé produit par la silice colloïdale.

Selon une variante préférée, la couche de masquage 80 comprend en outre un pigment interférentiel multicouche tel que décrit ci-après.

Lorsque l'on recherche un effet diffusant, la couche de masquage 80 peut comporter un mélange d'au moins un pigment interférentiel multicouche et une charge nanométrique telle que précédemment décrite.

Le pigment interférentiel multicouche présente la particularité de sélectionner préférentiellement certaines longueurs d'onde en réflexion et en transmission. Par exemple, un pigment iridescent bleu réfléchit dans la direction spéculaire (angle de réflexion égal à l'angle d'incidence) davantage les longueurs d'onde bleues que les autres. En transmission, la couleur obtenue est alors complémentaire de la couleur en réflexion, c'est-à-dire rouge-orangé. Les pigments interférentiels multicouches peuvent être relativement transparents, car peu absorbants, et par conséquent une couche de pigment interférentiel multicouche aura, en réflexion diffuse (dans toutes les autres directions autres que la direction spéculaire) la même couleur qu'en transmission (complémentaire à la couleur en réflexion spéculaire). En reprenant l'exemple ci-dessus, la couche de pigment iridescent bleu étalée sur un papier blanc donnera une couleur rouge-orangé.

Par « pigment interférentiel multicouche » il faut comprendre un pigment produisant une couleur par un phénomène d'interférences grâce à une succession sur le trajet de la lumière d'au moins deux matériaux d'indices de réfraction différents. Un pigment interférentiel multicouche est encore parfois qualifié de « nacre » dans le cas de couches déposées sur une base de forme plaquettaire. Un pigment interférentiel multicouche est différent d'un cristal liquide, qui peut générer également une couleur par un phénomène d'interférences en raison de sa structure intrinsèque. Ce pigment interférentiel peut être goniochromatique.

Par combinaison de la couleur liée à la diffusion de la lumière par la charge nanométrique et de celle liée à la réflexion diffuse par le pigment interférentiel multicouche, on peut obtenir par synthèse additive des couleurs, une couleur sensiblement proche de celle du substrat du document, par exemple blanche, en choisissant de manière adéquate la couleur du pigment et celle de la charge ; de préférence, on combine à la charge nanométrique un pigment interférentiel multicouche bleu, vert ou bleu-vert, voire un mélange de pigments verts et bleus.

La combinaison du pigment et de la charge nanométrique renforce la diffusion de la lumière incidente au sein de la couche de masquage 80. Cette combinaison permet également de limiter la proportion de la charge nanométrique ayant l'indice de réfraction le plus élevé, notamment le dioxyde de titane, donc de limiter l'opacification en lumière transmise et le cas échéant l'absorption des UV.

De préférence, le pigment interférentiel multicouche selon l'invention comporte une base transparente, de préférence minérale, revêtue d'au moins une couche d'un matériau d'indice de réfraction différent de celui de la base. Le pigment peut comporter une base plaquettaire, de préférence en mica ou en verre. Par exemple, le pigment comporte du mica ou de la silice (dioxyde de silicium) enrobé de dioxyde de titane.

Le pigment présente de préférence un substrat transparent par exemple en mica, et notamment des caractéristiques optiques complémentaires de celles de la silice pyrogénée colloïdale. Lorsque le substrat est blanc, le pigment est de préférence bleu ou vert ou bleu-vert. La couleur du pigment est celle obtenue en réflexion spéculaire d'incidence non normale.

De préférence, comme expliqué ci-dessus, le pigment interférentiel présente une couleur bleue, vert ou bleu-vert.

La taille moyenne D50, notamment en nombre, du pigment est de préférence comprise entre 2 et 150 microns, mieux entre 5 et 40 microns, encore mieux entre 5 et 25 microns.

Le pigment interférentiel multicouche peut être non goniochromatique, et ne comporter par exemple qu'une seule couche enrobant une base.

La quantité massique de pigment interférentiel multicouche par rapport à la masse de la couche de masquage 80 est de préférence compris entre 1 et 40 %, mieux entre 2 et 30 %, encore mieux entre 5 et 15 %.

L'exemple de réalisation de la figure 5 diffère de celui de la figure 2 par le fait que le revêtement 30 est absent de la face 29 du substrat 22 et remplacé par un revêtement 30 qui se situe entre la couche de métal 24 et la couche de cristaux liquides 27 dans une deuxième zone 40, distincte de la première zone 25. Le revêtement 30 est déposé non plus sous la forme d'un aplat mais sous la forme d'un motif, la couche de métal 24 étant continue et non ajourée dans la deuxième zone 40. Ainsi, on peut observer dans la première zone 25, en lumière transmise, un premier motif M1 tel que celui représenté à la figure 6, défini par la disposition des ajours et parties pleines au sein de la première zone 25.

Le revêtement 30 peut être déposé par impression de façon à définir un motif M2 qui est par exemple le même que celui observé dans la première zone 25 en lumière transmise ou son négatif, comme illustré sur la figure 7. La présence du revêtement sombre 30 sous la couche de cristaux liquides 27 permet d'observer un changement de couleur au droit des parties pleines du revêtement 30, passant par exemple du vert sous incidence normale O1 au bleu sous incidence oblique O2.

Le deuxième motif M2 n'est pas visible en lumière transmise et l'impression noire n'est pas visible au verso de l'élément 20.

L'élément de sécurité 20 représenté sur les figures 8 à 10 présente, comme les éléments 20 représentés sur les figures 2 et 5, une couche de métal 24 recouverte d'une couche de cristaux liquides 27 et partiellement démétallisée dans une première zone 25 de façon à permettre d'observer en lumière transmise un motif M1 tel qu'illustré à la figure 9. Toutefois, dans l'exemple de la figure 8, la couche de métal 24 présente dans une deuxième zone 50 un évidement 51. La face recto 23 du substrat 22 est recouverte dans cet évidement 51 par la couche de cristaux liquides 27, la structure de la figure 8 ne présentant plus le revêtement 30 de la figure 5 interposé entre la couche de métal 24 et la couche de cristaux liquides 27.

Le revêtement 30 est présent sur la face verso 29 du substrat 22, mais à la différence de celui de la figure 2, il définit un motif M2. Ce dernier se superpose à l'évidement 51 et permet de révéler la couche de cristaux liquides 27 au droit des parties pleines du revêtement 30, de sorte que l'on observe en lumière réfléchie un motif M2 dont la couleur change avec l'angle d'observation, ce motif M2 correspondant au revêtement 30 et passant par exemple de la couleur verte sous incidence normale O1 à la couleur bleue sous incidence oblique O2.

Le motif défini par le revêtement 30 est également visible en lumière réfléchie ou transmise du côté du verso de l'élément 20.

La couche de métal 24 peut former un cadre dans lequel le motif M2 est visible, comme illustré sur la figure 10.

Le revêtement 30 peut être recouvert par une couche de masquage 80 telle que précédemment décrite, en référence à la figure 14. Une telle couche de masquage recouvre de préférence tout l'élément de sécurité 20. En variante, la couche de masquage peut recouvrir au moins, notamment exactement, le revêtement 30.

Dans l'exemple des figures 11 à 13, l'élément 20 diffère de celui représenté à la figure 5 par le fait que la couche métallisée 24 présente un évidement 51 dans lequel le revêtement 30 est déposé. Ainsi, par rapport à la structure illustrée à la figure 8, le revêtement 30 est disposé non plus sur la face 29 mais sur la face 23, les effets obtenus en lumière transmise et en lumière réfléchie étant sensiblement les mêmes dans les exemples des figures 8 et 11.

Le revêtement 30 peut être recouvert par une couche de masquage 80 telle que précédemment décrite, sur la face 29. Une telle couche de masquage recouvre de préférence tout l'élément de sécurité 20. En variante, la couche de masquage peut recouvrir au moins partiellement, notamment exactement, le revêtement 30.

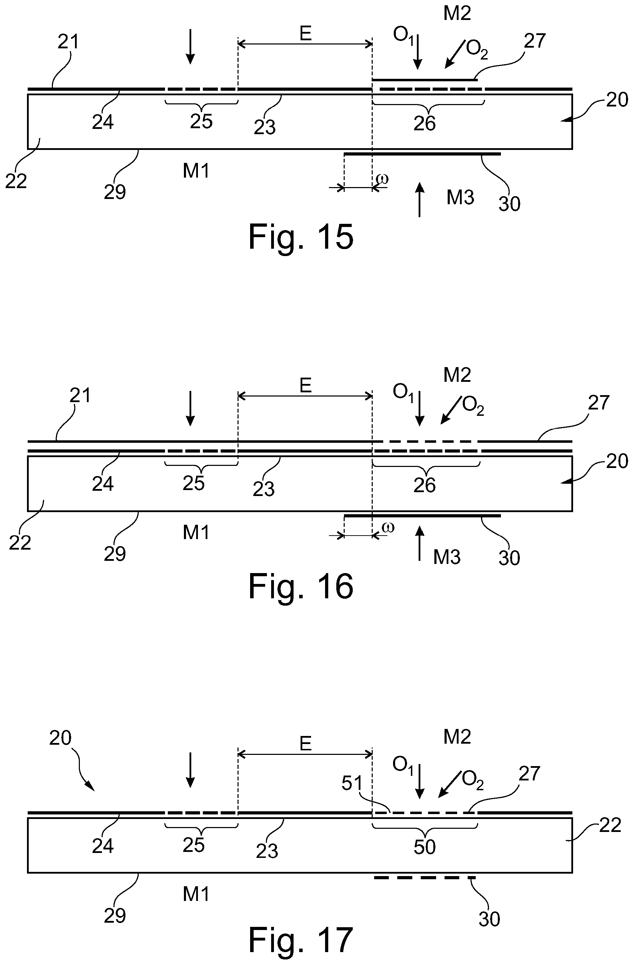

Dans la variante de la figure 15, on a illustré la possibilité pour la couche de cristaux liquides 27 de s'étendre sous la forme d'un aplat uniquement dans la deuxième zone 26.

La structure de l'élément de sécurité est pour le reste identique à celle de la figure 2, mais la réalisation de la couche de cristaux liquides 27 sous forme d'un aplat pourrait s'appliquer aussi bien aux autres exemples illustrés.

Sur la figure 16, on a illustré la possibilité de réaliser la couche de cristaux liquides 27 avec des ajours dans la deuxième zone 26. La structure de l'élément de sécurité est par exemple identique pour le restant à celle de la figure 2.

Les régions pleines de la couche de cristaux liquides 27, dans la deuxième zone, se superposent par exemple exactement aux ajours de la couche de métal 24. En variante, il en va différemment, mais de préférence les régions pleines de la couche de cristaux liquides 27 occupent des positions prédéfinies par rapport aux ajours de la couche de métal.

Sur la figure 17, on a illustré la possibilité pour la couche de cristaux liquides d'avoir des ajours qui se superposent exactement à ceux du revêtement 30. La structure de l'élément de sécurité est pour le reste identique à celle de la figure 5.

L'invention n'est pas limitée aux exemples qui viennent d'être décrits. En particulier, on peut combiner au sein d'un même élément de sécurité des caractéristiques des éléments décrits en référence aux différentes figures. En particulier, les particularités de la couche de cristaux liquides 27 décrites en référence aux figure 15 à 17 trouvent à s'appliquer aux exemples des figures 2 à 13.

Dans tous les exemples, l'élément de sécurité et/ou le document sécurisé peuvent présenter un ou plusieurs autres éléments de sécurité conventionnels, qui peuvent être de premier, deuxième ou troisième niveau.

L'élément de sécurité peut ainsi présenter au moins un hologramme ou un réseau de microlentilles.

La couche de cristaux liquides 27 des exemples illustrés peut être remplacée pour toute autre couche interférentielle non opaque.

L'expression "comportant un" peut se comprendre comme étant synonyme de "comprenant au moins un", sauf si le contraire est spécifié.

## Revendications

1. Elément de sécurité (20) pour document sécurisé (10), comportant :
- un support (22),
- une couche métallique (24) portée par le support, définissant dans au moins une première zone (25) un premier motif (M1) visible en lumière transmise, notamment un premier motif formé par une métallisation et/ou une démétallisation du support,
- une couche interférentielle non opaque, de préférence goniochromatique, notamment une couche de cristaux liquides (27), portée par le support, présente au moins dans une deuxième zone distincte de la première,
- une couche auxiliaire (30) absorbante, de préférence de couleur sombre, permettant de faire ressortir en lumière réfléchie au moins un deuxième motif (M2) avec la couche interférentielle non opaque en jouant sur le caractère absorbant du fond situé derrière la couche interférentielle non opaque, ce deuxième motif (M2) étant défini par un contraste entre l'association de la couche auxiliaire et de la couche interférentielle non opaque, et une zone métallisée de la couche de métal ou entre l'association de la couche auxiliaire et de la couche interférentielle non opaque et son environnement au niveau d'une zone démétallisée de la couche de métal,
**caractérisé en ce que** la couche auxiliaire est située essentiellement hors de la première zone.

2. Elément de sécurité selon la revendication 1, la couche interférentielle non opaque étant une couche de cristaux liquides.la couche auxiliaire étant de préférence de couleur sombre, de préférence noire.

3. Elément de sécurité selon l'une quelconque des revendications 1 et 2, la couche interférentielle non opaque, notamment la couche de cristaux liquides (27), étant présente dans la première zone (25).

4. Elément de sécurité selon l'une des revendications 1 à 3, la couche interférentielle non opaque, notamment la couche de cristaux liquides (27), recouvrant entièrement une face (23) du support (22).

5. Elément de sécurité selon l'une quelconque des revendications précédentes, la couche auxiliaire (30) étant déposée sous forme d'un aplat s'étendant dans toute la deuxième zone (26).

6. Elément de sécurité selon l'une quelconque des revendications 1 à 4, la couche auxiliaire étant déposée avec des ajours, dans la deuxième zone.

7. Elément de sécurité selon l'une quelconque des revendications précédentes, le deuxième motif (M2) définissant une image tramée.

8. Elément de sécurité selon l'une quelconque des revendications précédentes, la couche métallisée étant ajourée dans la deuxième zone (26).

9. Elément de sécurité selon l'une quelconque des revendications précédentes, la couche métallisée définissant dans la deuxième zone un motif en lumière transmise.

10. Elément de sécurité selon l'une quelconque des revendications précédentes, la couche auxiliaire s'étendant sur un côté du support opposé à celui portant la couche métallisée.

11. Elément selon l'une quelconque des revendications 1 à 10, le premier motif (M1) défini dans la première zone et le deuxième motif (M2) formé dans la deuxième zone étant liés géométriquement ou concernant un même objet ou être vivant, notamment étant identiques.

12. Elément selon l'une quelconque des revendications 1 à 11, comportant une couche de masquage (80) se superposant à la couche auxiliaire et en réduisant la visibilité d'un côté de l'élément (20).

13. Elément selon l'une quelconque des revendications 1 à 12, la couche interférentielle non opaque (27) s'étendant sous la forme d'un aplat dans la deuxième zone (26).

14. Elément selon l'une quelconque des revendications 1 à 12, la couche interférentielle non opaque (27) s'étendant sous une forme ajourée, notamment tramée, dans la deuxième zone (26), la couche interférentielle non opaque (27) étant de préférence disposée de façon repérée par rapport à la couche auxiliaire et/ou la couche métallique, notamment avec des régions pleines de la couche interférentielle non opaque se superposant exactement à des ajours de la couche métallique lorsque celle-ci est ajourée, ou à des régions pleines de la couche auxiliaire, lorsque celle-ci est ajourée.

15. Document sécurisé (10) comportant un élément de sécurité (20) tel que défini dans l'une quelconque des revendications précédentes, l'élément de sécurité étant de préférence sous forme de fil incorporé en fenêtres, les premier et deuxième motifs apparaissant chacun de préférence au moins partiellement dans une même fenêtre, l'un au moins des premier et deuxième motifs se retrouvant de préférence sur le document ailleurs que sur l'élément de sécurité.

## Patentansprüche

1. Sicherheitselement (20) für ein gesichertes Dokument (10), umfassend:
- einen Träger (22),
- eine Metallschicht (24), die von dem Träger getragen ist, die in mindestens einer ersten Zone (25) ein erstes Muster (M1) definiert, das im durchscheinenden Licht sichtbar ist, insbesondere ein erstes Muster, das durch eine Metallisierung und/oder eine Entmetallisierung des Trägers gebildet ist,
- eine nicht opake, vorzugsweise goniochromatische Interferenzschicht, insbesondere eine Flüssigkristallschicht (27), die von dem Träger getragen ist, weist mindestens eine zweite Zone auf, die von der ersten verschieden ist,
- eine absorbierende Hilfsschicht (30), vorzugsweise von dunkler Farbe, die ermöglicht, in reflektiertem Licht unter Nutzung des absorbierenden Charakters des Hintergrunds, der hinter der nicht opaken Interferenzschicht liegt, mindestens ein zweites Muster (M2) mit der nicht opaken Interferenzschicht zum Vorschein zu bringen, wobei dieses zweite Muster (M2) durch einen Kontrast zwischen der Verbindung der Hilfsschicht und der nicht opaken Interferenzschicht und einer metallisierten Zone der Metallschicht oder zwischen der Verbindung der Hilfsschicht und der nicht opaken Interferenzschicht und ihrer Umgebung an einer entmetallisierten Zone der Metallschicht definiert ist,
**dadurch gekennzeichnet, dass** die Hilfsschicht im Wesentlichen außerhalb der ersten Zone angeordnet ist.

2. Sicherheitselement nach Anspruch 1, wobei die nicht opake Interferenzschicht eine Flüssigkristallschicht ist, wobei die Hilfsschicht vorzugsweise von dunkler Farbe, vorzugsweise schwarz ist.

3. Sicherheitselement nach einem der Ansprüche 1 und 2, wobei die nicht opake Interferenzschicht, insbesondere die Flüssigkristallschicht (27), in der ersten Zone (25) vorhanden ist.

4. Sicherheitselement nach einem der Ansprüche 1 bis 3, wobei die nicht opake Interferenzschicht, insbesondere die Flüssigkristallschicht (27), eine Fläche (23) des Trägers (22) vollständig bedeckt.

5. Sicherheitselement nach einem der vorhergehenden Ansprüche, wobei die Hilfsschicht (30) in Form von einer Volltonfläche aufgebracht ist, die sich in der gesamten zweiten Zone (26) erstreckt.

6. Sicherheitselement nach einem der Ansprüche 1 bis 4, wobei die Hilfsschicht mit Durchbrechungen in der zweiten Zone aufgebracht ist.

7. Sicherheitselement nach einem der vorhergehenden Ansprüche, wobei das zweite Muster (M2) ein Rasterbild definiert.

8. Sicherheitselement nach einem der vorhergehenden Ansprüche, wobei die metallisierte Schicht in der zweiten Zone (26) durchbrochen ist.

9. Sicherheitselement nach einem der vorhergehenden Ansprüche, wobei die metallisierte Schicht in der zweiten Zone im durchscheinenden Licht ein Muster definiert.

10. Sicherheitselement nach einem der vorhergehenden Ansprüche, wobei sich die Hilfsschicht auf einer Seite des Trägers, die jener gegenüberliegt, die die metallisierte Schicht trägt, erstreckt.

11. Element nach einem der Ansprüche 1 bis 10, wobei das erste Muster (M1), das in der ersten Zone definiert ist, und das zweite Muster (M2), das in der zweiten Zone gebildet ist, geometrisch verbunden sind oder einen gleichen Gegenstand oder ein gleiches Lebewesen betreffen, insbesondere identisch sind.

12. Element nach einem der Ansprüche 1 bis 11, umfassend eine Maskierungsschicht (80), die die Hilfsschicht überlagert und dabei die Sichtbarkeit einer Seite des Elements (20) verringert.

13. Element nach einem der Ansprüche 1 bis 12, wobei sich die nicht opake Interferenzschicht (27) in Form von einer Volltonfläche in der zweiten Zone (26) erstreckt.

14. Element nach einem der Ansprüche 1 bis 12, wobei sich die nicht opake Interferenzschicht (27) in einer durchbrochenen Form, insbesondere in Rasterform, in der zweiten Zone (26) erstreckt, wobei die nicht opake Interferenzschicht (27) vorzugsweise passgenau in Bezug auf die Hilfsschicht und/oder die Metallschicht angeordnet ist, wobei sich insbesondere die vollen Bereiche der nicht opaken Zwischenschicht genau mit den Unterbrechungen der Metallschicht überlagern, wenn diese unterbrochen ist, oder mit den vollen Bereichen der Hilfsschicht, wenn diese unterbrochen ist.

15. Gesichertes Dokument (10), umfassend ein Sicherheitselement (20) wie in einem der vorhergehenden Ansprüche definiert, wobei das Sicherheitselement vorzugsweise in Form von einem in Fenstern eingebetteten Faden ist, wobei das erste und das zweite Muster jeweils vorzugsweise mindestens teilweise in einem gleichen Fenster erscheinen, wobei sich mindestens eines des ersten und zweiten Musters vorzugsweise auf dem Dokument an anderer Stelle als auf dem Sicherheitselement befindet.

## Claims

1. A security element (20) for security document (10), including:
- a carrier (22),
- a metal layer (24) borne by the carrier, defining in at least one first zone (25) a first pattern (M1) that is visible in transmitted light, in particular a first pattern formed by a metallization and/or a demetallization of the carrier,
- a non-opaque interference layer preferably goniochromatic, in particular a layer of liquid crystals (27), which layer is borne by the carrier, being present at least in a second zone distinct from the first,
- an absorbent auxiliary layer (30), preferably of dark color, allowing, in reflected light, at least one second pattern (M2) to be emphasized by the non-opaque interference layer thanks to the absorbent character of the background located behind the non-opaque interference layer, this second pattern (M2) being defined by a contrast between the association of the auxiliary layer and the non-opaque interference layer and a metallized zone of the metal layer, or between the association of the auxiliary layer and the non-opaque interference layer and its environment at the level of a demetallized zone of the metal layer, **characterized in that** the auxiliary layer is essentially located outside the first zone.

2. The security element as claimed in claim 1, the non-opaque interference layer being a layer of liquid crystals, the auxiliary layer being preferably dark in color, preferably black.

3. The security element as claimed in any one of claims 1 to 2, the non-opaque interference layer, in particular the layer of liquid crystals (27), being present in the first zone (25).

4. The security element as claimed in any one of claims 1 to 3, the non-opaque interference layer, in particular the layer of liquid crystals (27), completely covering one face (23) of the carrier (22).

5. The security element as claimed in any one of the preceding claims, the auxiliary layer (30) being deposited in the form of a solid extending throughout the second zone (26).

6. The security element as claimed in any one of claims 1 to 4, the auxiliary layer being deposited with apertures, in the second zone.

7. The security element as claimed in any one of the preceding claims, the second pattern (M2) defining a raster image.

8. The security element as claimed in any one of the preceding claims, the metallized layer being apertured in the second zone (26).

9. The security element as claimed in any one of the preceding claims, the metallized layer defining in the second zone a pattern in transmitted light.

10. The security element as claimed in any one of the preceding claims, the auxiliary layer extending on a side of the carrier opposite that bearing the metallized layer.

11. The element as claimed in any one of claims 1 to 10, the first pattern (M1) defined in the first zone and the second pattern (M2) formed in the second zone being geometrically related or relating to the same object or living being, and in particular being identical.

12. The element as claimed in any one of claims 1 to 11, including a masking layer (80) that is superposed on the auxiliary layer and that decreases the visibility thereof from one side of the element (20).

13. The element as claimed in any one of claims 1 to 12, the non-opaque interference layer (27) taking the form of a solid in the second zone (26).

14. The element as claimed in any one of claims 1 to 12, the non-opaque interference layer (27) taking an apertured and in particular raster form in the second zone (26), the non-opaque interference layer (27) being preferably placed in register with the auxiliary layer and/or the metal layer, unapertured regions of the non-opaque interference layer in particular being superposed exactly on the apertures of the metal layer, when the latter is apertured, or on unapertured regions of the auxiliary layer, when the latter is apertured.

15. A security document (10) including a security element (20) such as defined in any one of the preceding claims, the security element preferably taking the form of a thread incorporated into windows, the first and second patterns each appearing preferably at least partially in a given window, at least one of the first and second patterns being preferably found on the document elsewhere than on the security element.
